(19) **Europäisches Patentamt**

**European Patent Office**

**Office européen des brevets**

(11) Veröffentlichungsnummer: **0 203 283 B1**

(12) **EUROPÄISCHE PATENTSCHRIFT**

(45) Veröffentlichungstag der Patentschrift: **06.11.91**

(51) Int. Cl.⁵: **G01L 9/02**

(21) Anmeldenummer: **86103091.4**

(22) Anmeldetag: **07.03.86**

Die Akte enthält technische Angaben, die nach dem Eingang der Anmeldung eingereicht wurden und die nicht in dieser Patentschrift enthalten sind.

(54) **Drucksensor mit Bourdonrohr.**

(30) Priorität: **04.04.85 DE 8510202 U**

(43) Veröffentlichungstag der Anmeldung:
**03.12.86 Patentblatt 86/49**

(45) Bekanntmachung des Hinweises auf die Patenterteilung:
**06.11.91 Patentblatt 91/45**

(84) Benannte Vertragsstaaten:
**DE FR GB SE**

(56) Entgegenhaltungen:
**FR-A- 2 095 053**
**US-A- 3 267 734**
**US-A- 3 992 945**

(73) Patentinhaber: **ROBERT BOSCH GMBH**
**Postfach 50**
**W-7000 Stuttgart 1(DE)**

(72) Erfinder: **Huber, Werner, Dr. Dipl.-Phys.**
**Bahnhofstrasse 64**
**F-7052 Schwaikheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

### Stand der Technik

Die Erfindung geht aus von einem Drucksensor nach der Gattung des Hauptanspruchs. Es ist bekannt, zur Messung des Drucks die von dem Bourdonrohr erzeugten mechanischen Meßwerte, die ein Maß für den gemessenen Druck sind, mit Hilfe eines Potentiometers in elektrische Signale umzuwandeln. Dabei war es bisher notwendig, um Meßwerte in verwertbarer Größe zu erreichen, ein möglichst großes Bourdonrohr zu verwenden um einen möglichst langen Meßweg zu erhalten. Dadurch bedingt ist auch eine entsprechende Baugröße des gesamten Drucksensors.

Um die Baugröße des Drucksensors zu verkleinern, wurde bisher ein Drucksensor mit einem Hallelement zur Umwandlung des mechanischen Meßwertes in ein elektrisches Signal verwendet. Ein Hallelement bedingt aber eine relativ aufwendige Auswerteschaltung und weist daneben eine nicht lineare Kennlinie der Hallspannung über den Druck auf.

Aus der US-A-3 992 945 ist ein Drucksensor mit einem Bourdonrohr zu entnehmen. Dessen elektrische Meßsignale werden mit Hilfe eines Potentiometers erzeugt. Diese Spannungswerte werden mit Hilfe einer im Gehäuse angeordneten Schaltung in Stromwerte umgewandelt. Die Meßwerte werden einer externen Auswerteschaltung zugeführt.

Aus der FR-A 20 95 053 ist ein Druckaufnehmer bekannt, dessen mit Hilfe eines Rohrs ermittelten Werte in elektrische Meßsignale umgewandelt werden. Diese Meßsignale werden mit Hilfe eines Verstärkers verstärkt. Dieser Verstärker ist in einem zusätzlich am Gehäuse angeflanschten Gehäuseteil angeordnet.

### Vorteile der Erfindung

Der erfindungsgemäße Drucksensor mit den Merkmalen des Hauptanspruchs hat demgegenüber den Vorteil, daß er sehr kompakt und preisgünstig baut. Es sind nur kleine Auslenkungen des Bourdonrohrs notwendig, weshalb auch ein kleines Bourdonrohr verwendet werden kann. Der Drucksensor ist besonders bei kleinen Einbaumaßen verwendbar, wie sie im Kraftfahrzeugbereich und insbesondere bei Antiblockier-Bremssystemen notwendig sind. Daneben kann der kleine Meßweg im Mittenbereich eines Potentiometers, das länger als der Meßweg ist, abgegriffen werden, wodurch sich eine sehr lineare Kennlinie ergibt.

Durch die in den Unteransprüchen aufgeführten Maßnahmen sind vorteilhafte Weiterbildungen und Verbesserungen der im Hauptanspruch angegebenen Merkmale möglich.

### Zeichnung

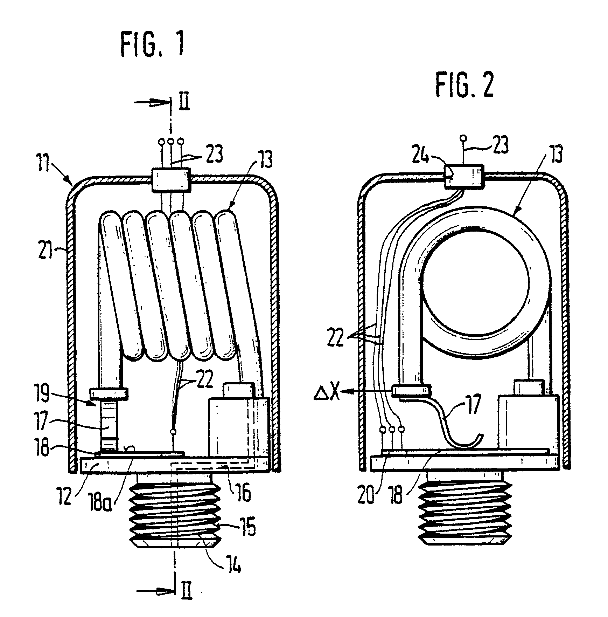

Ein Ausführungsbeispiel der Erfindung ist in der Zeichnung dargestellt und in der nachfolgenden Beschreibung näher erläutert. Es zeigen Figur 1 einen Schnitt durch einen Drucksensor und Figur 2 einen Schnitt in Richtung II-II nach Figur 1.

### Beschreibung des Ausführungsbeispiels

In den Figuren 1 und 2 ist ein Drucksensor 11 dargestellt, der zur Messung von hohen hydraulischen Drücken verwendet werden kann, wie sie beispielsweise bei Antiblockier-Bremssystemen für Kraftfahrzeuge erforderlich sind. Auf einem Bodenteil 12 des Drucksensors 11 ist ein Ende eines herkömmlich bekannten Bourdonrohrs 13 angeflanscht. Das Bodenteil 12 besteht aus Edelstahl oder einem anderen nicht rostenden Metall. Es weist eine Verlängerung 14 auf, die mit Hilfe eines Außengewindes 15 in eine nicht dargestellte Leitung für ein zu messendes Druckmittel einschraubbar ist. In der Verlängerung 14 und im Bodenteil 12 selbst ist eine Bohrung 16 ausgebildet, die das Innere des Bourdonrohrs 13 mit der Leitung verbindet und über die somit Druckmittel ins Innere des Bourdonrohrs 13 strömen kann. Somit wirkt dort der gleiche Druck wie in der Leitung. Das andere Ende des Bourdonrohrs 13 ist geschlossen. An ihm befindet sich ein Schleifkontakt 17, der mit einer Widerstandsbahn 18a, die sich auf einer Leiterplatte 18 befindet, in Wirkverbindung steht. Der Schleifkontakt 17 und die Widerstandsbahn 18a bilden zusammen ein Potentiometer 19. Die Widerstandsbahn 18a kann vorteilhafterweise als sogenannte Leitplastik ausgeführt sein. Die Leiterplatte 18 ist auf der dem Bourdonrohr 13 zugewandten Seite des Bodenteils 12 angeordnet. Ferner befindet sich auf der Leiterplatte 18 ein Verstärker 20, z.B. ein Operationsverstärker. Der Drucksensor 11 ist von einer Schutzkappe 21 umgeben, die den Drucksensor 11 vor Verschmutzung und Beschädigung schützt. Die Schutzkappe 21 ist rotationssymmetrisch ausgebildet. Vom Verstärker 20 führen elektrische Leitungen 22 zu Anschlüssen 23, die in einer Bohrung 24 in der Schutzkappe 21 angeordnet sind.

Der in der Leitung wirkende Druck pflanzt sich über die Bohrung 16 in das Innere des Bourdonrohrs 13 fort. Dadurch wird dieses gedehnt, und der Schleifkontakt 17 wird auf der Leiterplatte 18 um die Länge $\Delta X$, die einem mechanischen Meßsignal entspricht, ausgelenkt. Dieses mechanische Meßsignal wird vom Potentiometer 19 in ein elektrisches Signal umgewandelt. Mit Hilfe des Verstärkers 20 wird nun dieses Signal verstärkt und einer Regeleinrichtung des Antiblockier-Bremssystems zugeführt. Durch entsprechend große Verstärkung der vom Potentiometer 19 erzeugten elektrischen Signale kann die vom Schleifkontakt überstrichene Länge Δ X sehr kurz sein, d.h. das Bourdonrohr 13 kann klein ausgeführt sein. Ferner ist durch Einbau des Verstärkers 20 in den Drucksensor 11 eine kleine und kompakte Bauweise des Drucksensors 11 möglich, wie sie insbesondere bei Antiblockier-Bremssystemen für Personenkraftwagen notwendig ist.

Gewöhnlich werden Drucksensoren in einem großen Temperaturbereich eingesetzt, wobei bei zunehmender Temperatur die Empfindlichkeit abnimmt. Der Verstärker 20 kann aus diesem Grunde durch ein elektrisches System ergänzt werden, das bei den Meßwerten des Potentiometers auf elektronischem Wege die Temperaturempfindlichkeit kompensiert. Dieser Meßfehler kann somit leicht eliminiert werden, wobei keine große bauliche Veränderung des Drucksensors notwendig ist. Ferner ist es vorteilhaft, den Meßweg im Mittenbereich des Potentiometers 19 herauszugreifen, so daß man einen Drucksensor 11 mit guter Linearität und somit exakte Meßwerte erhält. Die Verstärkungs-Schaltung kann ferner so gestaltet werden, daß mit ihr der Nullpunkt und die Steigung der Druckfühler-Kennlinie auf die exakten Soll-Werte abgeglichen werden können, d.h. ein mechanischer Ausgleich kann entfallen.

Ferner ist es auch möglich, die Verlängerung 14 ohne Gewinde auszubilden. Es ist aber dann zur Abdichtung ein O-Ring an der Außenwand der Verlängerung 14 anzuordnen und das Bodenteil 12 mit Hilfe von Schrauben auf der Leitung zu befestigen.

**Patentansprüche**

1. Drucksensor (11) für insbesondere hohe hydraulische Drücke mit einem Gehäuse (21), in dem als druckempfindliches Element ein Bourdonrohr (13) angeordnet ist, das zur Umwandlung seiner mechanischen Meßwerte mit einem Widerstands-Potentiometer (19) in Wirkverbindung steht, das einen Schleifkontakt (17) und eine Leiterplatte (18) aufweist, und wobei sich im Gehäuse (21) ein Verstärker (20) für die Meßwerte des Potentiometers befindet, dadurch gekennzeichnet, daß der Verstärker (20) in der Leiterplatte (18) des Potentiometers (19) angeordnet ist.

2. Drucksensor nach Anspruch 1, dadurch gekennzeichnet, daß der Verstärker (20) ein Operationsverstärker ist.

3. Drucksensor nach Anspruch 1 und/oder 2, dadurch gekennzeichnet, daß der Verstärker (2o) temperaturkompensierende Bauteile aufweist.

4. Drucksensor nach einem der Ansprüche 1 bis 3, dadurch gekennzeichnet, daß der Verstärker (20) Bauteile aufweist, mit denen die Druckfühler-Kennlinie abgeglichen werden kann.

5. Drucksensor nach einem der Ansprüche 1 bis 4, dadurch gekennzeichnet, daß das Gehäuse (21) rotationssymmetrisch ausgebildet ist.

6. Drucksensor nach einem der Ansprüche 1 bis 4, dadurch gekennzeichnet, daß die Leiterplatte (18) auf einer Bodenplatte (12) angeordnet ist, die eine zapfenförmige Verlängerung (14) mit O-Ring-Dichtung und mehrere Nasen zur Befestigung der Bodenplatte (12) auf einem Bauteil aufweist.

7. Drucksensor nach einem der Ansprüche 1 bis 6, dadurch gekennzeichnet, daß der Drucksensor (11) Teil eines Antiblockier-Bremssystems ist.

**Claims**

1. Pressure sensor (11), for particularly high hydraulic pressures, having a housing (21) in which there is arranged as pressure-sensitive element a Bourdon tube (13) which for the purpose of converting its mechanical measured values is operatively connected to a resistance potentiometer (19) which has a sliding contact (17) and a printed circuit board (18), and there being located in the housing (21) an amplifier (20) for the measured values of the potentiometer, characterised in that the amplifier (20) is arranged in the printed circuit board (18) of the potentiometer (19).

2. Pressure sensor according to Claim 1, characterised in that the amplifier (20) is an operational amplifier.

3. Pressure sensor according to Claim 1 and/or 2, characterised in that the amplifier (20) has temperature-compensated components.

4. Pressure sensor according to one of Claims 1 to 3, characterised in that the amplifier (20) has components with which the pressure sensor characteristic can be compensated for.

5. Pressure sensor according to one of Claims 1 to 4, characterised in that the housing (21) is constructed in a rotationally symmetrical fashion.

6. Pressure sensor according to one of Claims 1 to 4, characterised in that the printed circuit board (18) is arranged on a bottom plate (12) which has a peg-shaped extension (14) with an O-ring seal and a plurality of lugs for fastening the bottom plate (12) on a component.

7. Pressure sensor according to one of Claims 1 to 6, characterised in that the pressure sensor (11) is part of an anti-lock braking system.

**Revendications**

1. Capteur de pression (11) pour des pressions hydrauliques particulièrement élevées avec un boîtier (21) dans lequel est disposé comme élément sensible à la pression, un tube de Bourdon (13), qui pour la transformation de ses valeurs de mesure mécanique est en liaison active avec un potentiomètre à rhéostat (19), qui présente un contact à frottement (17) et une carte imprimée (18), et dans lequel se trouve dans le boîtier (21), un amplificateur (20) pour les valeurs mesurées par le potentiomètre, caractérisé en ce que l'amplificateur (20) est disposé dans la carte imprimée (18) du potentiomètre (19).

2. Capteur de pression selon la revendication 1, caractérisé en ce que l'amplificateur (20) est un amplificateur opérationnel.

3. Capteur de pression selon les revendications 1 ou 2, caractérisé en ce que l'amplificateur (20) présente des pièces constitutives compensant la température.

4. Capteur de pression selon l'une des revendications 1 à 3, caractérisé en ce que l'amplificateur (20) présente des pièces constitutives, avec lesquelles la courbe de fonctionnement du capteur de pression, peut être ajustée.

5. Capteur de pression selon l'une des revendications 1 à 4, caractérisé en ce que le boîtier (21) a une forme symétrique de révolution.

6. Capteur de pression selon l'une des revendications 1 à 4, caractérisé en ce que la carte imprimée (18) est disposée sur une embase (12), qui présente un prolongement (14) en forme de téton avec un joint torique d'étanchéité et plusieurs tenons pour la fixation de l'embase (12) sur une pièce constitutive.

7. Capteur de pression selon l'une des revendications 1 à 6, caractérisé en ce que le capteur de pression (11) fait partie d'un système de freinage antibloquant.

# FIG. 1

# FIG. 2